# EUROPEAN PATENT APPLICATION

(11) **EP 4 345 296 A1**
(43) Date of publication of application: **03.04.2024**
(21) Application number: 23382632.0
(22) Date of filing: 21.06.2023
(51) Int. Cl.: F03D 13/20, E04H 12/12, E04H 12/16

(54) **CONCRETE SEGMENT OF A SECTION OF A TOWER OF A WIND TURBINE AND ADAPTER OF A TOWER OF A WIND TURBINE TOWER**

(30) Priority: 27.09.2022 EP 22382885; 27.09.2022 EP 22382884
(71) Applicant: Nordex Energy Spain, S.A.U., 31395 Barasoain (Navarra) (ES); Nordex Energy SE & Co. KG, 22419 Hamburg (DE)
(72) Inventor: Rubio Guillen, Iñigo, BARASOAIN (ES); Ongay, Jon Ongay, BARASOAIN (ES); Garduño, Aitor Garduño, BARASOAIN (ES); Gonzalez, Miguel, BARASOAIN (ES); García, Iván, BARASOAIN (ES); Arlabán, Teresa, BARASOAIN (ES)
(74) Representative: Pons

(57) **Abstract**

The object of the invention is a concrete segment of a section of a tower of a wind turbine and an adapter of a tower of a wind turbine and to a wind turbine comprising a tower which in turn comprises the concrete segment of the section and/or the adapter.

## Description

### OBJECT OF THE INVENTION

The object of the invention is a concrete segment of a section of a tower of a wind turbine and an adapter of a tower of a wind turbine.

The invention also relates to a wind turbine comprising a tower which in turn comprises the concrete segment of the section and/or the adapter.

### BACKGROUND OF THE INVENTION

The wind turbines comprise a tower, a nacelle which houses the electrical generator and a rotor formed in turn by at least two blades. The tower of the wind turbine supports the nacelle and the rotor. Large wind turbines have steel, lattice, or reinforced concrete towers or even mixed-type towers, the latter comprising sections of different materials, for example, a lower section of concrete and an upper section of steel or lattice.

Due to the height of the wind turbines, the tower has to be divided into several annular sections which are stacked during the wind turbine assembly stage thus forming the full height of the tower. Dividing the tower into sections has the advantage that each section has a size such that its transport by road or rail is easier.

One of the most commonly used materials for large towers is concrete, since it involves competitive costs and performance compared to those to produce steel towers of similar characteristics. However, the weight of each concrete tower section can easily exceed one hundred tons, this fact being infrequent for metal tower sections, so stacking the concrete sections requires heavy-tonnage lifting and positioning means. The cost of using such lifting and positioning means, which may be for example a crane, is directly related to the tonnage and height that it is capable of handling and the time of use thereof. This high-tonnage crane is also used for lifting and positioning the nacelle, as the weight of the nacelle may also exceed 100 tons.

It is known in the state of the art, the towers for wind turbines being of the kind of "concrete-steel hybrid" towers comprising a first tower section comprising at least two concrete segments and further comprising a second tower section made of steel, the tower further comprising an adapter for connecting the two tower sections, and the towers for wind turbines being of the kind of "full-concrete" towers comprising an adapter disposed in the upper part of the upper concrete tower section and below a wind turbine component, the wind turbine component being preferably the yaw bearing of the nacelle.

In a first embodiment, the adapter comprises an annular concrete element and a steel element that has at least one annular flange, wherein the flange covers an upper surface of the concrete element of the adapter in installation position. Consequently, this adapter consists of concrete and steel, in which case the steel element is cast directly with the concrete element of the adapter. Here, the annular flange of the steel element is fully grouted in the concrete without air inclusions. In a related method for building the tower, the steel element with an annular flange is initially provided for building the adapter, which is installed headlong in a ring-shaped formwork. Afterwards, concrete is placed in the formwork and as a result of that, the annular concrete element of the adapter can be made. Here, the concrete is placed directly on the underside of the flange so that, in the finished adapter, the flange is fully grouted establishing a connection between the concrete element and the steel element of the adapter.

In a second embodiment, the adapter is made entirely of steel, and a grout layer must be disposed between the adapter and the first tower section made of concrete to establish a connection between the steel adapter and the concrete section.

However, in both embodiments, the adapter is joined to the immediately below concrete part or section by means of bolts passing through a first set of holes. The adapter also comprises a second set of holes for allowing the passage of tensioning elements of the tower. The first set of holes and the second set of holes are disposed in concentrical circumferences with different radius, thus needing more material and complex system for attaching auxiliary devices of the tower or thus resulting in technical solutions wherein the disposition of the tensioning elements far from the inner tower wall not carrying out an optimum post-tensioning of the concrete wall.

The present invention solves the problems described above.

### DESCRIPTION OF THE INVENTION

The invention relates to a concrete segment of a section of a tower of a wind turbine, wherein the tower comprising at least the concrete section, an adapter, a plurality of tensioning elements configured to tension the tower and a plurality of bolts configured to join the adapter to the concrete section;
wherein the concrete section comprises:
   - at least two concrete segments;
   - at least two vertical joints configured to join the at least two concrete segments;
wherein the concrete segment comprises:
   - an upper flange which in turn comprises:
      - a first set of holes intended to accommodate, in use, the plurality of tensioning elements; and
      - a second set of holes intended accommodate, in use, the plurality of bolts;
wherein at least one hole of the second set of holes is disposed, in use, between each one of the at least two vertical joints and at least one hole of the first set of holes.

The concrete segment so configured comprises a region, i.e., a proximal region to each vertical joint wherein at least a bolt is disposed between each one of the at least two vertical joints and at least one hole of the first set of holes, thus reducing the stresses in the proximity of the vertical joint.

Since the concrete section is configured to be disposed below the adapter and to be joined to it, the tensioning elements with the concrete section so configured can be disposed as close as possible to a central portion of an adapter that is described below, so limiting the stresses since the loads coming above the adapter are transmitted by the central portion.

Since the concrete segment comprises a greater thickness in the proximity of the vertical joint, the disposition of a tensioning element configured to be disposed by the interior of the tower would not be possible.

In this way, the configuration of the concrete segment described above minimizes the necessary concrete to cast the concrete segment.

Optionally at least a part of the first set of holes and at least a part of the second set of holes are disposed, in use, in a substantially symmetrical way with respect to the at least two vertical joints. Preferably, at least two holes of the second set of holes are disposed, in use, between each one of the at least two vertical joints and the at least one hole of the first set of holes.

Optionally, a sequence of the second set of holes and the first set of holes is n, 1, n, 1, n, 1, m, 1, n, 1, n, corresponding the odd positions in the sequence to the holes of the second set of holes and the even positions in the sequence to the holes of the first set of holes, wherein n>=1 and m>=1.

Also optionally, the second set of holes is distributed in an uneven distribution.

Optionally, the concrete segment comprises a greater number of holes of the second set of holes than a number of holes of the first set of holes, wherein the holes of the first set of holes and the holes of the second set of holes are distributed in an uneven distribution.

Optionally, the uneven distribution of holes comprises a first group of holes of the second set of holes and at least a second group of holes of the second set of holes and at least a first group of holes of the first set of holes, wherein first group of holes of the second set of holes is substantially greater in number than the at least a second group of holes of the second set of holes and the at least first group of holes of the first set of holes.

Optionally, a sequence of the second set of holes and the first set of holes is n, 1, n, 1, n, 1, m, 1, n, 1, n, corresponding the odd positions in the sequence to the holes of the second set of holes and the even positions in the sequence to the holes of the first set of holes, wherein n>=1 and m>=2 and m>n. Preferably m>2n.

Optionally, a ratio between the second set of holes and the first set of holes is between 3 and 5.

Optionally, the first set of holes and the second set of holes are disposed in a single circumferential row.

So, disposing the first set of holes and the second set of holes in a single circumferential row, it is possible to dispose the tensioning elements as close as possible to the inner wall of the concrete section disposed below and therefore of the tower, so increasing the available space in the interior of the tower.

Also, alternating the first set of holes and the second set of holes in a single circumferential row, the space intended to be occupied by tensioning elements are now occupied by bolts, thereby reducing the stress on the concrete of the concrete section disposed below the adapter.

The invention also relates to an adapter of a tower of a wind turbine, wherein the tower comprises the adapter, a concrete section, a plurality of tensioning elements configured to tension the tower and a plurality of bolts configured to join the adapter to the concrete section;
wherein the concrete section comprises:
   - at least two concrete segments;
   - at least two vertical joints configured to join the at least two concrete segments; and
wherein the adapter comprises:
   - a lower flange which in turn comprises:
      - a first set of holes intended to accommodate, in use, the plurality of tensioning elements; and
      - a second set of holes intended to accommodate, in use, the plurality of bolts;
wherein at least one hole of the second set of holes is disposed, in use, between each one of the at least two vertical joints and at least one hole of the first set of holes.

Optionally, at least a part of the first set of holes and at least a part of the second set of holes are disposed, in use, in a substantially symmetrical way with respect to the at least two vertical joints. Preferably, at least two holes of the second set of holes are disposed, in use, between each one of the at least two vertical joints and the at least one hole of the first set of holes.

Optionally, a sequence of the second set of holes and the first set of holes is n, 1, n, 1, n, 1, m, 1, n, 1, n, corresponding the odd positions in the sequence to the holes of the second set of holes and the even positions in the sequence to the holes of the first set of holes, wherein n>=1 and m>=1.

Also optionally, the second set of holes is distributed in an uneven distribution.

Optionally, a greater number of holes of the second set of holes than a number of holes of the first set of holes, wherein the holes of the first set of holes and the holes of the second set of holes are distributed in an uneven distribution.

Optionally, the uneven distribution of holes comprises a first group of holes of the second set of holes and at least a second group of holes of the second set of holes and at least a first group of holes of the first set of holes, wherein first group of holes of the second set of holes is substantially greater in number than the at least a second group of holes of the second set of holes and the at least first group of holes of the first set of holes.

Optionally, a sequence of the second set of holes and the first set of holes is n, 1, n, 1, n, 1, m, 1, n, 1, n, corresponding the odd positions in the sequence to the holes of the second set of holes and the even positions in the sequence to the holes of the first set of holes, wherein n>=1 and m>=2 and m>n, preferably m>2n.

Optionally, a ratio between the second set of holes and the first set of holes is between 3 and 5.

The invention also relates to a wind turbine comprising a tower of a wind turbine comprising the adapter described above and/or a concrete section comprising at least two concrete segments as described above and at least two vertical joints configured to join the at least two concrete segments, tensioning elements configured to tension the tower and bolts configured to join the adapter to the concrete section.

### DESCRIPTION OF THE FIGURES

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:

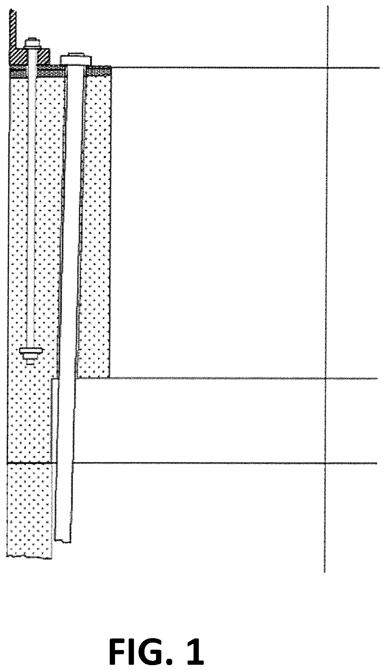

Figure 1 shows a concrete part and a steel part of an adapter of a wind turbine tower according to the state of the art, showing bolts passing through a first set of holes and a second set of holes for allowing the passage of tensioning elements of the tower, wherein the first set of holes and the second set of holes are disposed in concentrical circumferences with different radius.

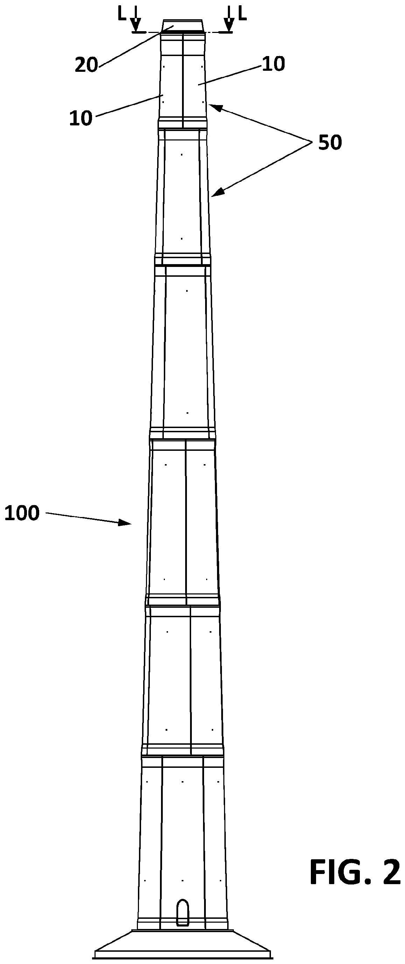

Figure 2 shows an elevation view of a tower of a wind turbine comprising an adapter according to the invention and a concrete section according to the invention.
Figure 3 shows a detail of section view LL of the tower of Figure 2 according to a first embodiment, wherein the adapter has been partially deleted to shown the upper flange of the concrete section of the tower.

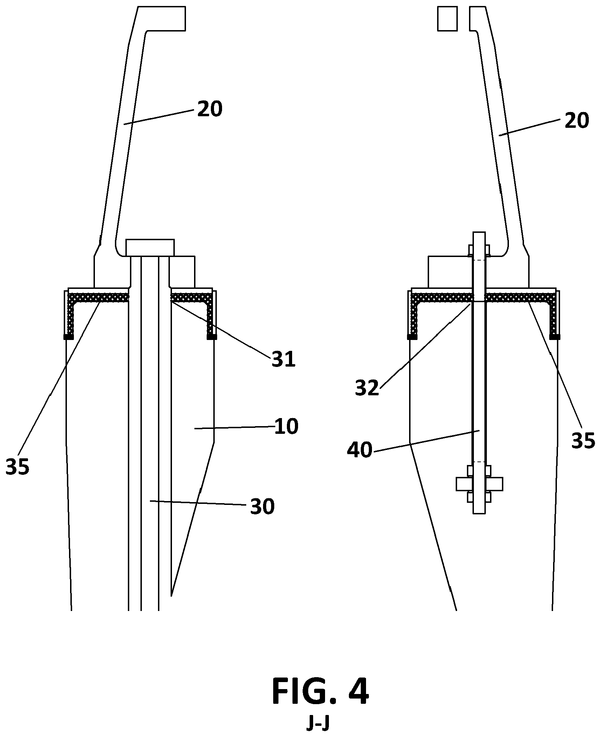

Figure 4 shows a section view JJ of Figure 3.

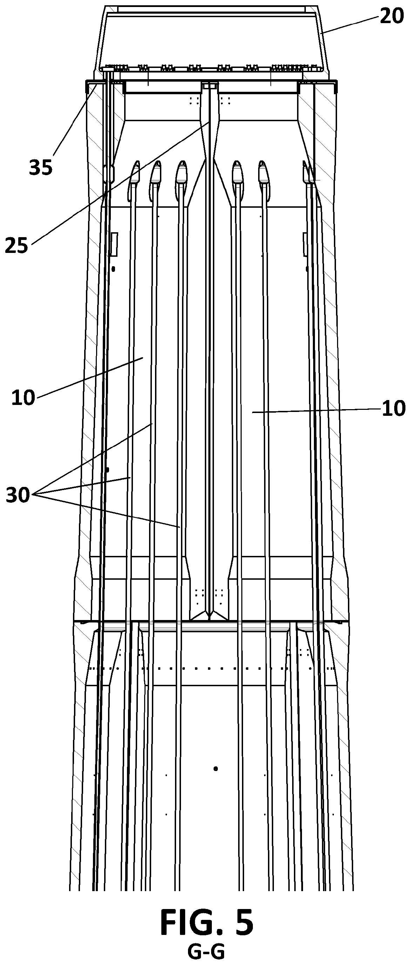

Figure 5 shows a section view GG of Figure 3.

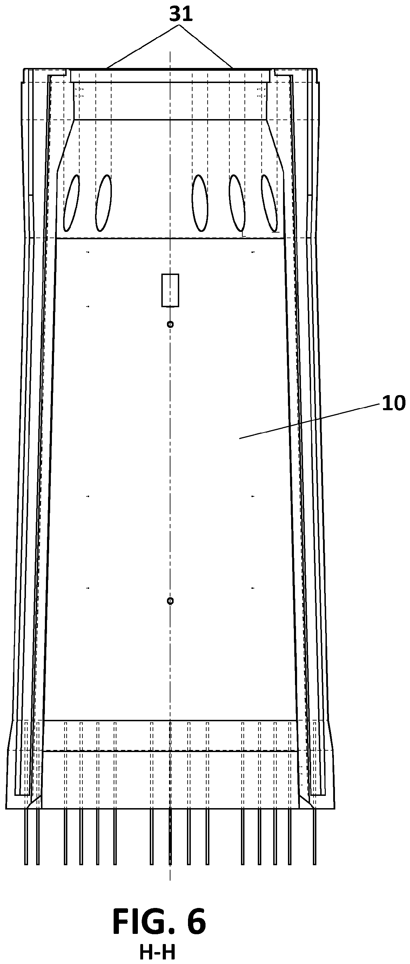

Figure 6 shows a section view HH of Figure 3.

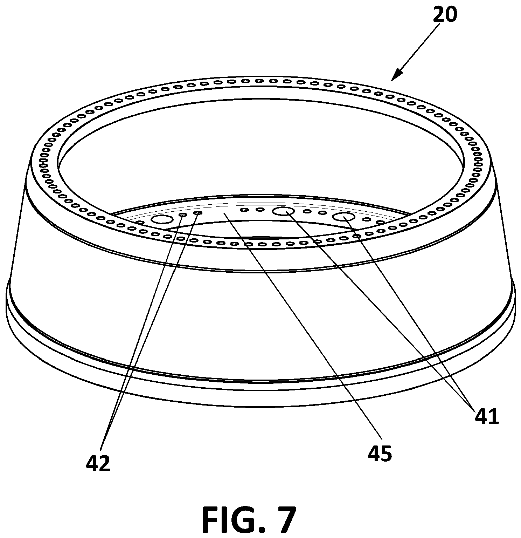

Figure 7 shows a perspective view of the adapter according to the invention.
Figure 8 shows a detail of section view LL of the tower of Figure 2 according to a second embodiment.

### PREFERRED EMBODIMENT OF THE INVENTION

The following is a detailed description of the concrete segment (10) of a section (50) of a tower (100) of a wind turbine, wherein the tower (100) comprises at least the concrete section (50), an adapter (20), a plurality of tensioning elements (30) configured to tension the tower and a plurality of bolts (40) configured to join the adapter (20) to the concrete section (50);
wherein the concrete section (50) comprises:
   - at least two concrete segments (10);
   - at least two vertical joints (25) configured to join the at least two concrete segments (10);
wherein the concrete segment (10) comprises:
   - an upper flange (35) which in turn comprises:
      - a first set of holes (31) intended to accommodate, in use, the plurality of tensioning elements (30); and
      - a second set of holes (32) intended accommodate, in use, the plurality of bolts (40);
wherein at least one hole (32) of the second set of holes is disposed, in use, between each one of the at least two vertical joints (25) and at least one hole (31) of the first set of holes.

In this embodiment, at least a part of the first set of holes (31) and at least a part of the second set of holes (32) are disposed, in use, in a substantially symmetrical way with respect to the at least two vertical joints (25).

Also, two holes (32) of the second set of holes are disposed, in use, between each one of the at least two vertical joints (25) and one hole (31) of the first set of holes.

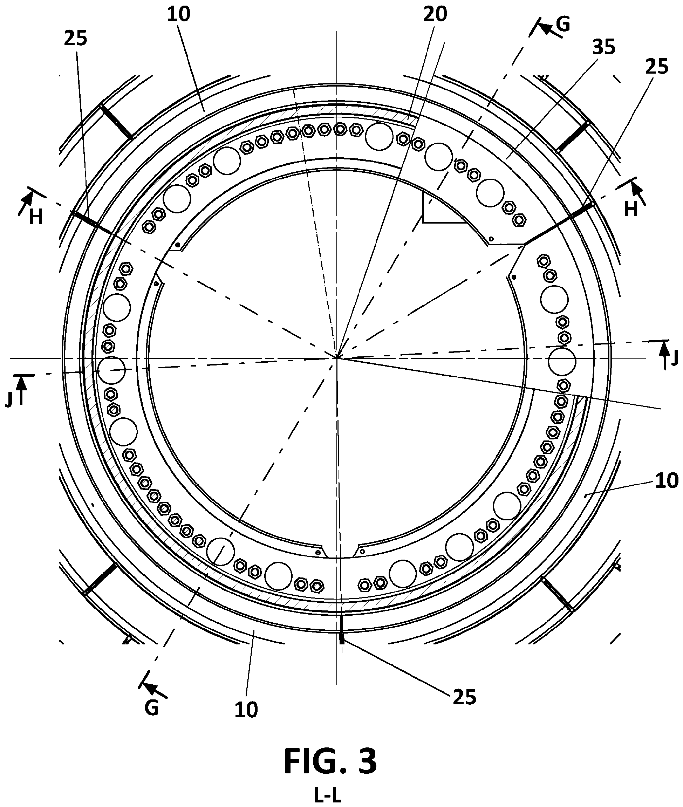

A sequence of the second set of holes (32) and the first set of holes (31) is n, 1, n, 1, n, 1, m, 1, n, 1, n, corresponding the odd positions in the sequence to the holes (32) of the second set of holes (32) and the even positions in the sequence to the holes (31) of the first set of holes (31), wherein n=2 and m=8, as shown in Figure 3. So, the second set of holes (32) is distributed in an uneven distribution, comprising a greater number of holes (32) of the second set of holes than a number of holes (31) of the first set of holes, wherein the holes (31) of the first set of holes and the holes (32) of the second set of holes are distributed in an uneven distribution.

In this embodiment, a ratio between the second set of holes (32) and the first set of holes (31) is 3,6.

The adapter (20) of a tower (100) of a wind turbine according to a preferred embodiment is now described, wherein the tower comprises the adapter (20), a concrete section (50), a plurality of tensioning elements (30) configured to tension the tower (100) and a plurality of bolts (40) configured to join the adapter (20) to the concrete section (50);
wherein the concrete section (50) comprises:
   - at least two concrete segments (10);
   - at least two vertical joints (25) configured to join the at least two concrete segments (10); and
wherein the adapter (20) comprises:
   - a lower flange (45) which in turn comprises:
      - a first set of holes (41) intended to accommodate, in use, the plurality of tensioning elements (30); and
      - a second set of holes (42) intended to accommodate, in use, the plurality of bolts (40);
wherein at least one hole (42) of the second set of holes is disposed, in use, between each one of the at least two vertical joints (25) and at least one hole (41) of the first set of holes.

In this embodiment, at least a part of the first set of holes (41) and at least a part of the second set of holes (42) are disposed, in use, in a substantially symmetrical way with respect to the at least two vertical joints (25).

Also, two holes (42) of the second set of holes are disposed, in use, between each one of the at least two vertical joints (25) and the at least one hole (41) of the first set of holes.

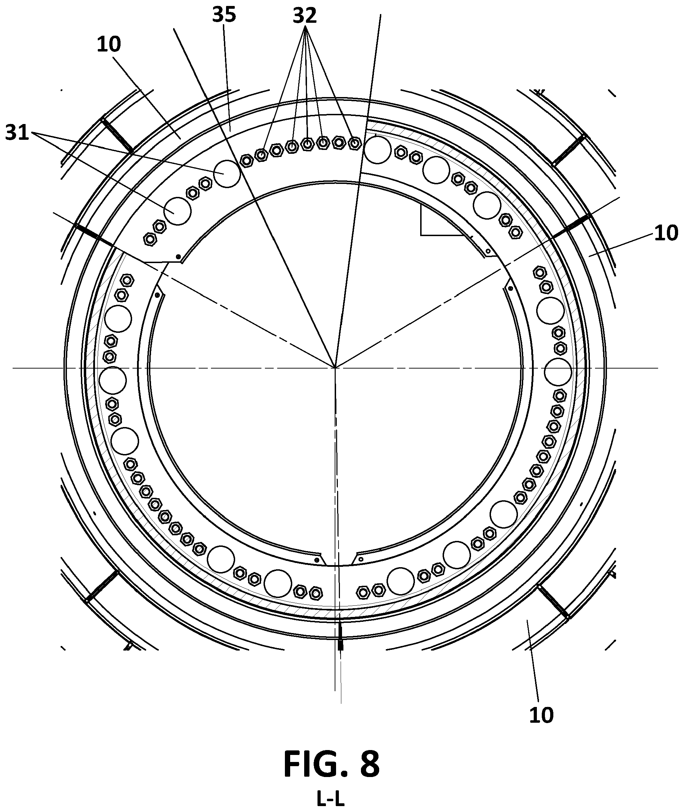

A sequence of the second set of holes (42) and the first set of holes (31) is n, 1, n, 1, n, 1, m, 1, n, 1, n, corresponding the odd positions in the sequence to the holes (42) of the second set of holes (42) and the even positions in the sequence to the holes (41) of the first set of holes (41), wherein n=2 and m=8, as shown in Figure 8. So, the second set of holes (42) is distributed in an uneven distribution, comprising a greater number of holes (42) of the second set of holes than a number of holes (41) of the first set of holes, wherein the holes (41) of the first set of holes and the holes (42) of the second set of holes are distributed in an uneven distribution.

In this embodiment, a ratio between the second set of holes (42) and the first set of holes (41) is 3,6.

The wind turbine comprising a tower (100), also comprises an adapter (20) as described above for this embodiment, a concrete section (50) comprising three concrete segments (10) as described above for this embodiment and three vertical joints (25) configured to join the three concrete segments (10), tensioning elements (30) configured to tension the tower (100) and bolts (40) configured to join the adapter (20) to the concrete section (50).

## Claims

1. Concrete segment (10) of a section (50) of a tower (100) of a wind turbine, wherein the tower (100) comprises at least the concrete section (50), an adapter (20), a plurality of tensioning elements (30) configured to tension the tower and a plurality of bolts (40) configured to join the adapter (20) to the concrete section (50);
wherein the concrete section (50) comprises:
- at least two concrete segments (10);
- at least two vertical joints (25) configured to join the at least two concrete segments (10);
wherein the concrete segment (10) comprises:
- an upper flange (35) which in turn comprises:
- a first set of holes (31) intended to accommodate, in use, the plurality of tensioning elements (30); and
- a second set of holes (32) intended accommodate, in use, the plurality of bolts (40);
wherein at least one hole (32) of the second set of holes is disposed, in use, between each one of the at least two vertical joints (25) and at least one hole (31) of the first set of holes.

2. The concrete segment (10) of claim 1, wherein at least a part of the first set of holes (31) and at least a part of the second set of holes (32) are disposed, in use, in a substantially symmetrical way with respect to the at least two vertical joints (25).

3. The concrete segment (10) of claim 2, wherein at least two holes (32) of the second set of holes are disposed, in use, between each one of the at least two vertical joints (25) and the at least one hole (31) of the first set of holes.

4. The concrete segment (10) of any of previous claims, wherein a sequence of the second set of holes (32) and the first set of holes (31) is n, 1, n, 1, n, 1, m, 1, n, 1, n, corresponding the odd positions in the sequence to the holes (32) of the second set of holes (32) and the even positions in the sequence to the holes (31) of the first set of holes (31), wherein n>=1 and m>=1.

5. The concrete segment (10) of any of claims 1 to 3, wherein the second set of holes (32) is distributed in an uneven distribution.

6. The concrete segment (10) of claim 5, comprising a greater number of holes (32) of the second set of holes than a number of holes (31) of the first set of holes, wherein the holes (31) of the first set of holes and the holes (32) of the second set of holes are distributed in an uneven distribution.

7. The concrete segment (10) of claim 6, wherein the uneven distribution of holes comprises a first group of holes (32) of the second set of holes and at least a second group of holes (32) of the second set of holes and at least a first group of holes (31) of the first set of holes, wherein first group of holes (32) of the second set of holes is substantially greater in number than the at least a second group of holes (32) of the second set of holes and the at least first group of holes (31) of the first set of holes.

8. The concrete segment (10) of any claims 5 to 7, wherein a sequence of the second set of holes (32) and the first set of holes (31) is n, 1, n, 1, n, 1, m, 1, n, 1, n, corresponding the odd positions in the sequence to the holes (32) of the second set of holes (32) and the even positions in the sequence to the holes (31) of the first set of holes (31), wherein n>=1 and m>=2 and m>n.

9. Adapter (20) of a tower (100) of a wind turbine, wherein the tower comprises the adapter (20), a concrete section (50), a plurality of tensioning elements (30) configured to tension the tower (100) and a plurality of bolts (40) configured to join the adapter (20) to the concrete section (50);
wherein the concrete section (50) comprises:
- at least two concrete segments (10);
- at least two vertical joints (25) configured to join the at least two concrete segments (10); and
wherein the adapter (20) comprises:
- a lower flange (45) which in turn comprises:
- a first set of holes (41) intended to accommodate, in use, the plurality of tensioning elements (30); and
- a second set of holes (42) intended to accommodate, in use, the plurality of bolts (40);
wherein at least one hole (42) of the second set of holes is disposed, in use, between each one of the at least two vertical joints (25) and at least one hole (41) of the first set of holes.

10. The adapter (20) of claim 9, wherein at least a part of the first set of holes (41) and at least a part of the second set of holes (42) are disposed, in use, in a substantially symmetrical way with respect to the at least two vertical joints (25).

11. The adapter (20) of claim 10, wherein at least two holes (42) of the second set of holes are disposed, in use, between each one of the at least two vertical joints (25) and the at least one hole (41) of the first set of holes.

12. The adapter (20) of any of claims 9 to 11, wherein a sequence of the second set of holes (42) and the first set of holes (31) is n, 1, n, 1, n, 1, m, 1, n, 1, n, corresponding the odd positions in the sequence to the holes (42) of the second set of holes (42) and the even positions in the sequence to the holes (41) of the first set of holes (41), wherein n>=1 and m>=1.

13. The adapter (20) of any of claims 9 to 11, wherein the second set of holes (42) is distributed in an uneven distribution.

14. The adapter (20) of claim 13, comprising a greater number of holes (42) of the second set of holes than a number of holes (41) of the first set of holes, wherein the holes (41) of the first set of holes and the holes (42) of the second set of holes are distributed in an uneven distribution.

15. The adapter (20) of claim 14, wherein the uneven distribution of holes comprises a first group of holes (42) of the second set of holes and at least a second group of holes (42) of the second set of holes and at least a first group of holes (41) of the first set of holes, wherein first group of holes (42) of the second set of holes is substantially greater in number than the at least a second group of holes (42) of the second set of holes and the at least first group of holes (41) of the first set of holes.

16. The adapter (20) of any claims 13 to 15, wherein a sequence of the second set of holes (42) and the first set of holes (41) is n, 1, n, 1, n, 1, m, 1, n, 1, n, corresponding the odd positions in the sequence to the holes (42) of the second set of holes (42) and the even positions in the sequence to the holes (41) of the first set of holes (41), wherein n>=1 and m>=2 and m>n.

17. Wind turbine comprising a tower (100) of a wind turbine comprising an adapter (20) of any of claims 9 to 18 and/or a concrete section (50) comprising at least two concrete segments (10) of any of claims 1 to 8 and at least two vertical joints (25) configured to join the at least two concrete segments (10), tensioning elements (30) configured to tension the tower (100) and bolts (40) configured to join the adapter (20) to the concrete section (50).
